# EUROPEAN PATENT APPLICATION

(11) **EP 3 636 947 A1**
(43) Date of publication of application: **15.04.2020**
(21) Application number: 18199673.7
(22) Date of filing: 10.10.2018
(51) Int. Cl.: F16D 13/58

(54) **CLUTCH HOUSING**

(71) Applicant: MAGNA Powertrain (Changzhou) Co., Ltd., 213033 Jiangsu (CN)
(72) Inventor: ZHAO, Quande, Changzhou city, Jiangsu province (CN); LIU, Pengfei, Changzhou, 213033 (CN)
(74) Representative: Zangger, Bernd

(57) **Abstract**

Clutch housing, especially for a dual-clutch transmission, comprising a first internal spline (1) and a second internal spline (2) which is located at a position different from the position of the first internal spline (1), wherein the clutch housing comprises a first clutch housing part (3), which is a stamping part made of sheet steel (4) and which comprises the first internal spline (1), and that the clutch housing comprises a second clutch housing part (5), which is a stamping part made of sheet steel (4) and which comprises the second internal spline (2), wherein the first clutch housing part (3) and the second clutch housing part (5) are joined together to build the clutch housing and a method to produce such a clutch housing.

## Description

### TECHNICAL FIELD

The invention relates to a clutch housing, especially to a clutch housing for a dual-clutch transmission (DCT), and to a method to produce such a clutch housing.

### BACKGROUND

Dual clutch transmissions (DCT) are commonly known and are a type of usually automatic transmissions or automated automotive transmissions which use two separate clutches for odd and even gear sets. They can fundamentally be described as two separate manual transmissions with their respective clutches contained within one housing and working as one unit.

The housing of such a clutch unit, which is suitable for use in a dual clutch transmission, usually has two different internal splines, which can usually hold the external lamellas of the two clutches contained in the unit.

Such a clutch housing having two different internal splines can however be used also for other types of transmissions, especially for usual automatic or automated transmissions. One of the splines can be used for example for coupling or decoupling an input shaft to the clutch housing.

The process of forming such a clutch housing with two internal splines is complex and expensive. Usually the process involves flow forming of a complex forging raw part, which is very expensive. In addition, before and after the flow forming, a lot of CNC (Computerized Numerical Control) machining is needed to achieve the desired final shape of the housing. Both, the forging part and the intensive CNC machining that is required are expensive. A lot of material gets wasted during the machining.

### SUMMARY

One object of the invention is therefore to specify an improved clutch housing having two internal splines, especially for a dual-clutch transmission. In particular, the clutch housing should be cheaper to produce than the prior art clutch housings. In addition, a cheap and efficient method to produce such a clutch housing shall be specified.

The object of the invention is achieved by means of a clutch housing, comprising a first internal spline and a second internal spline which is located at a position different from the position of the first internal spline, wherein the clutch housing comprises a first clutch housing part, which is a stamping part made of sheet steel and which comprises the first internal spline, and wherein the clutch housing comprises a second clutch housing part, which is a stamping part made of sheet steel and which comprises the second internal spline, wherein the first clutch housing part and the second clutch housing part are joined together to build the clutch housing.

According to the invention the clutch housing is not build by a single piece but by using two separate clutch housing parts, which can each be manufactured more easily, than the complex complete housing including both splines. Therefore, a forging process is not needed, and a complex forging raw part is not needed. According to the invention, both housing parts - which both comprise a single spline each - are stamping parts made of sheet steel and are therefore manufactured by simple stamping from a sheet steel blank, thereby avoiding material loss. The splines can be formed more easily in the separated housing parts than in a complex common or complete housing. The formation of the clutch housing needs much less machining than conventional single piece housings.
The two housing parts have to be joined after their stamping and forming process and therefore form together the final clutch housing, for example clutch housing of a dual clutch.

Further advantageous embodiments and developments of the invention will become apparent from the dependent claims and from the description when considered together with the figures.

Preferably the first internal spline and the second internal spline are arranged coaxially.

Preferably the first internal spline and the second internal spline have different diameters.

Preferably the second internal spline is shifted axially in relation to the first internal spline.

Preferably the first and second internal spline can be used to hold the external lamellas which can be coupled / decoupled to internal lamellas to build a clutch. An internal spline can also be used to hold external lamellas that can be coupled / decoupled to more than one independent set of internal lamellas to build several clutches. Preferably the first internal spline and the first clutch housing part are adapted to interact with two independent sets of internal lamellas to build two clutches, for example for coupling / decoupling two different output shafts, for example in a dual-clutch transmission.

It is advantageous if the first clutch housing part and the second clutch housing part are joined together by press fit and/or by welding connection.

The first clutch housing part is preferably a roller die part, i.e. it is made by roller die forming after the stamping process. Preferably the first spline is formed by roller die forming.

The second clutch housing part is preferably a Grob part, i.e. it is made by Grob forming after the stamping. Preferably the second spline is formed by Grob forming. Grob forming is a forming process named after the Swiss company "Grob". The process is also called Grob cold forming process and is based on the principle that the total forming effort needed is broken down into numerous forming increments spread along the entire cylindrical length of the zone being formed.

It is advantageous if the first clutch housing part has essentially a cylindrical shape and the second clutch housing part has essentially a cylindrical shape. In other words, the first clutch housing part can have the overall shape of a can and the second clutch housing part can have the overall shape of a can.

It is advantageous if the first clutch housing part has an internal surface area that is machined in order for the second clutch housing part to be press fitted into the machined internal surface area.

It is also advantageous if the second clutch housing part comprises an outer ring surface that is machined in order to be press fitted into the first clutch housing part.

Preferably the first clutch housing part comprises a first cylindrical area of larger diameter - which contains preferentially the first internal spline - and a second cylindrical area of smaller diameter, which is axially shifted in relation to the first cylindrical area - into which preferentially the second clutch housing part is press fitted. Preferably embossments are formed in the transition zone between the first cylindrical area and the second cylindrical area, at least in some sections of the housing than can be radially distributed. The embossments are preferably machined after their formation.

Preferably the second clutch housing part comprises a hub that is adapted for receiving a shaft. The shaft can be the rotor shaft of an electric motor. The hub can be adapted to be non-rotatably coupled with an input shaft. The hub can also be adapted to be rotatably coupled with an input shaft. The internal spline of the second clutch housing part can be used to carry lamellas which are arranged for coupling/ decoupling the input shaft to the clutch housing.

The object of the invention is also achieved by a method to produce such a clutch, wherein the first clutch housing part is made by stamping a sheet steel and forming the first internal spline in the stamped sheet steel, wherein the second clutch housing part is made by stamping another sheet steel and forming the second internal spline in this other stamped sheet steel, and wherein finally the first clutch housing part and the second clutch housing part become joined together to build the clutch housing.

Preferably forming the first internal spline in the stamped sheet steel of the first clutch housing part is done by roller die forming.

Preferably forming the second internal spline in the stamped sheet steel of the second clutch housing part is done by Grob forming.

It is advantageous if the first clutch housing part and the second clutch housing part become joined together to build the clutch housing by pressing the second clutch housing part into the first clutch housing part and welding together, preferably by laser welding, the first and second clutch housing parts.

It is particularly advantageous if after forming the first internal spline in the stamped sheet steel of the first clutch housing part, and preferably before joining with the second clutch housing part, the first clutch housing part is machined.

It is particularly advantageous if after forming the second internal spline in the stamped sheet steel of the second clutch housing part, and preferably before joining with the first clutch housing part, the second clutch housing part is machined.

After joining the first clutch housing part and the second clutch housing part the assembled clutch housing can also be machined.

However, overall less machining is required when using the new method to build a clutch housing with two internal splines assembled from two separate housing parts, having one spline each, as compared to prior art clutch housings.

### DRAWINGS

The present invention is explained in greater detail below with reference to the illustrative embodiments given in the schematic figures of the drawing, in which:
- Fig. 1: shows a clutch housing according to the prior art;
- Fig. 2a: shows a clutch housing according to the invention in a front view;
- Fig. 2b: shows a cross-sectional view of the clutch housing according to the section S-S in Fig. 2a;
- Fig. 3: shows schematically how a clutch housing according to the invention is built from two clutch housing parts.
- Fig. 4a: shows a cross-sectional view of the clutch housing, corresponding to Fig. 2b;
- Fig. 4b: shows a detail view of the clutch housing corresponding to Detail A in Fig. 4a.
- Fig. 5a: shows a cross-sectional view of the first clutch housing part;
- Fig. 5b: shows a detail view of the first clutch housing part corresponding to Detail B in Fig. 5a.
- Fig. 5c: shows a detail view of the first clutch housing part corresponding to Detail C in Fig. 5a.
- Fig. 6a: shows a cross-sectional view of the second clutch housing part;
- Fig. 6b: shows a detail view of the second clutch housing part corresponding to Detail D in Fig. 6a.
- Fig. 7: schematically shows a method to produce a clutch housing according to the invention.

### DESCRIPTION

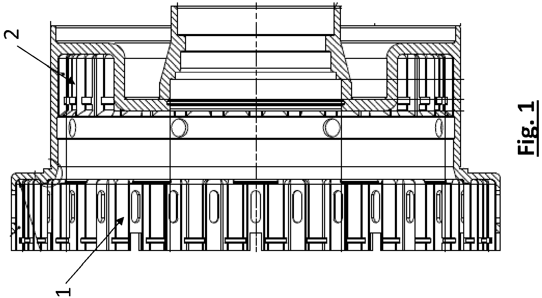

Fig. 1 shows a cross-sectional view of a clutch housing for a dual-clutch transmission as known in the prior art. The clutch housing is made from a single piece and comprises a first internal spline 1 and a second internal spline 2, which is located at a position different from the position of the first internal spline 1.

The first and second internal splines 1, 2 are arranged coaxially and are axially shifted. They have different diameters.

The single part housing is made using a complex forging raw part, using a flow forming process and applying a high amount of CNC machining, to end up with the single piece clutch housing in the desired shape.

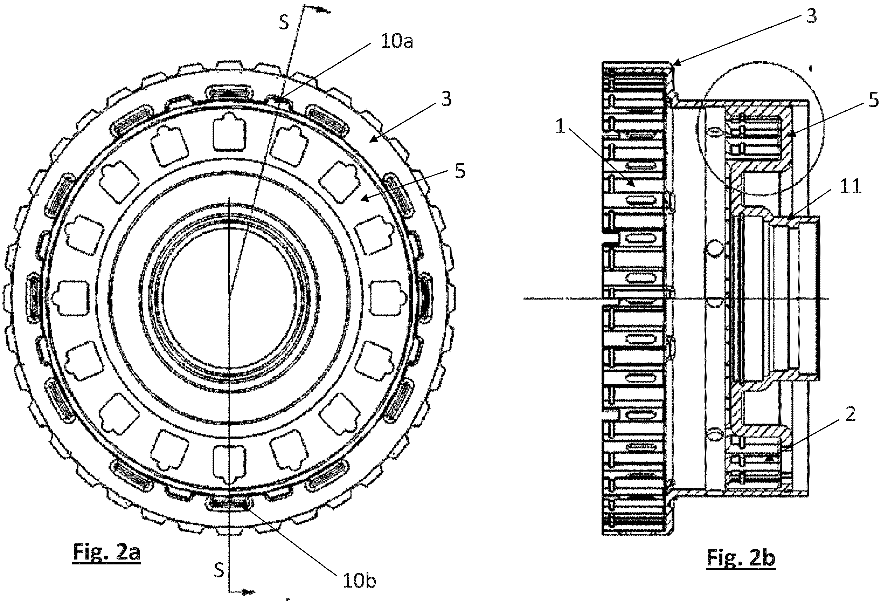

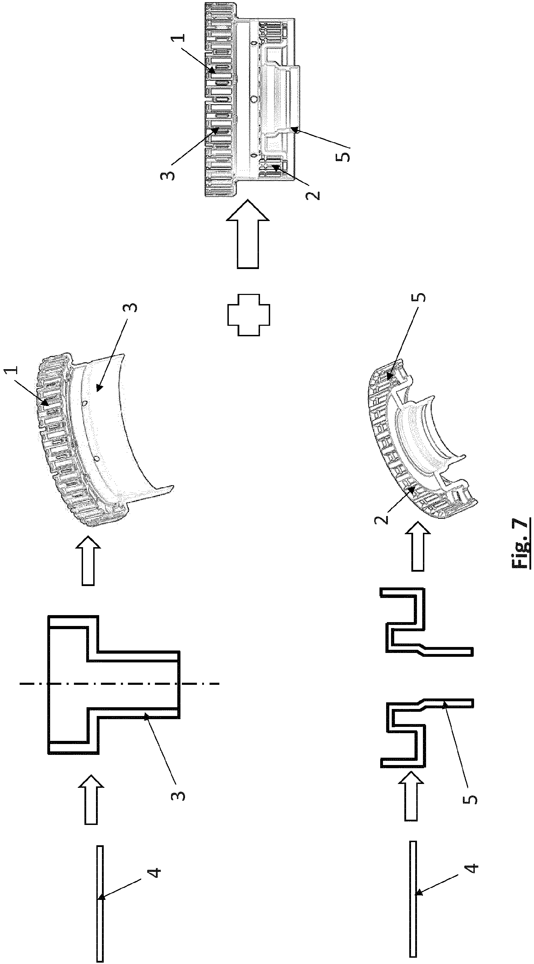

Fig. 2a and 2b show a clutch housing according to the invention, in a front view (Fig. 2a) and in a sectional view S-S (Fig. 2b). As can be easily seen in Fig. 2b, the clutch housing consists of two different parts, the first clutch housing part 3, which is a stamping part made of sheet steel 4 (see fig. 7) and which comprises a first internal spline 1, and a second clutch housing part 5, which is also a stamping part made of sheet steel 4 (Fig. 7) and which comprises a second internal spline 2. The first clutch housing part 3 and the second clutch housing part 5 are joined together to build the common clutch housing.

The first internal spline 1 and the second internal spline 2 are arranged coaxially and the second internal spline 2 is shifted axially in relation to the first internal spline 1. The internal splines 1, 2 have both a circular shape but different diameters.

The second clutch housing part 5 forms a hub 11 that is adapted for receiving a shaft, preferably an input shaft that is set up to rotate the clutch housing.

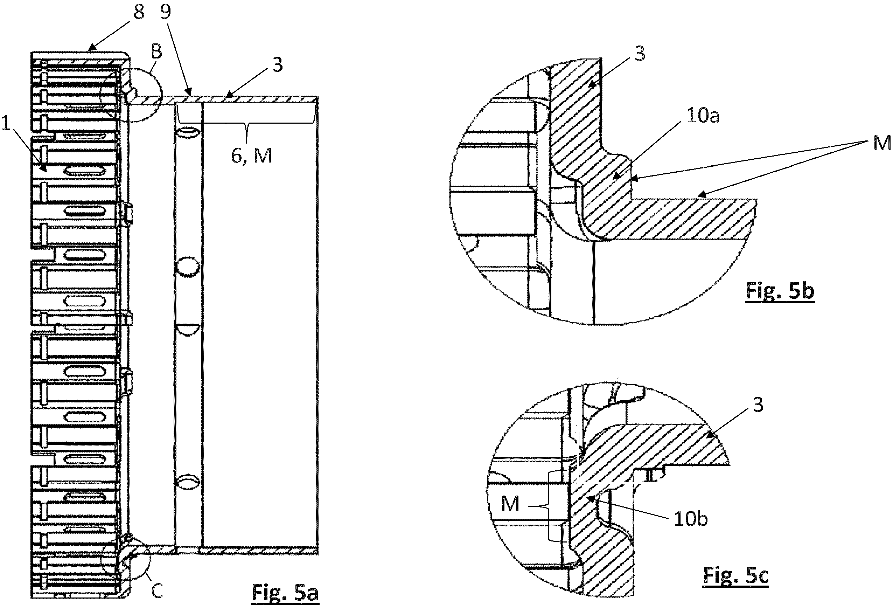

The first clutch housing part 3 is shown in more detail in Figs. 5a, 5b, 5c.

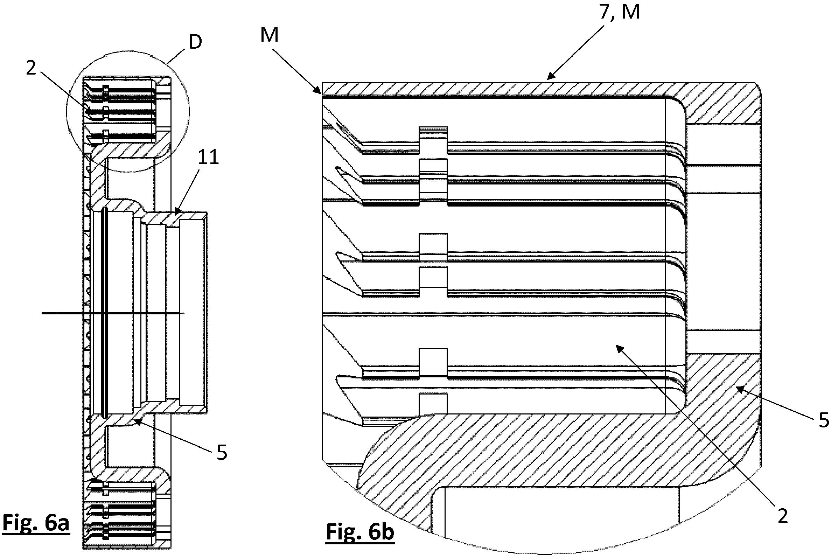

The second clutch housing part 5 is shown in more detail in Figs. 6a, 6b.

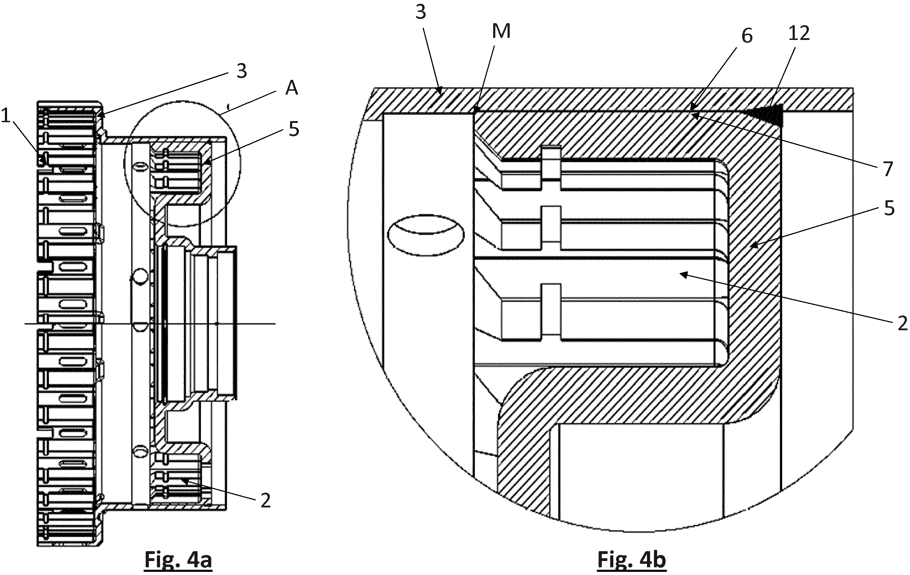

The first clutch housing part 3 and the second clutch housing part 5 are joined together by press fit and by welding connection, which is shown in more detail in Figs. 4a, 4b.

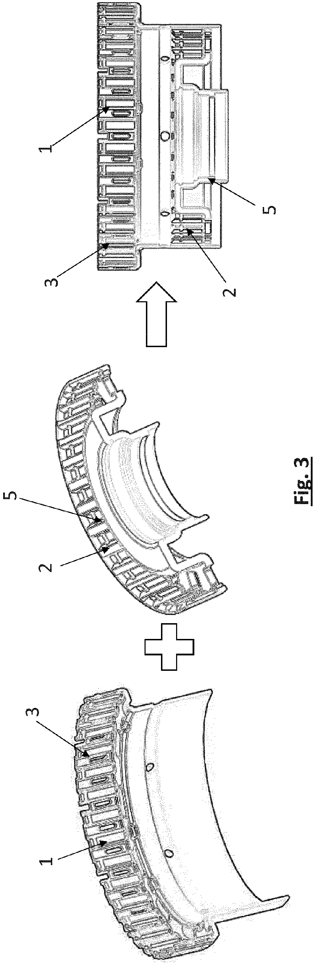

Fig. 3 shows schematically how a clutch housing according to the invention is built from two clutch housing parts.

A first clutch housing part 3 which contains the first internal spline 1 is produced by roller die forming and machining afterwards where necessary. A second clutch housing part 5 which contains the second internal spline 2 is produced by Grob cold forming and machining afterwards where necessary.

Finally, the first clutch housing part 3 and the second clutch housing part 5 become joined together using a welding connection to build the clutch housing.

The process for manufacturing the clutch housing is shown in more detail in Fig. 7.

Fig. 4b shows a detail view of the clutch housing corresponding to Detail A in Fig. 4a. The join between the first clutch housing part 3 and the second clutch housing part 5 comprises a press fit connection between an internal surface area 6 of the first clutch housing part 3, which was previously machined and an outer ring surface 7 of the second clutch housing part 5, which was previously machined as well.

In addition, the first clutch housing part 3 and the second clutch housing part 5 are connected by a weld 12.

Fig. 5a, b and c show the first clutch housing part 3 in more detail.

The first clutch housing part 3 is a roller die part, made by roller die forming after a stamping process.

The first clutch housing part 3 has essentially a cylindrical shape or can shape.

The first clutch housing part 3 comprises a first cylindrical area 8 of larger diameter which contains the first internal spline 1 and a second cylindrical area 9 of smaller diameter, into which the second clutch housing part 5 is press fitted later.

The first clutch housing part 3 has an internal surface area 6 that is machined M in order for the second clutch housing part 5 to be press fitted into the machined internal surface area 6.

In the transition zone between the first cylindrical area 8 and the second cylindrical area 9 embossments 10a, 10b are formed in some sections distributed radially over the first clutch housing part. Fig. 5b corresponds to detail B from Fig. 5a and shows the shape of an embossment 10a. Fig. 5c corresponds to detail C from Fig. 5a and shows the shape of an embossment 10b. The radial distribution of the embossments 10a, 10b can be seen best in Fig. 2a. The embossments are machined after forming the embossments in the machined regions M.

Fig. 6a shows the second clutch housing part 5, which is a Grob part, and therefore made by Grob forming after the stamping process.

The second clutch housing part 5 also has essentially a cylindrical shape or can shape, respectively.

The second clutch housing part 5 comprises a hub 11 that is adapted for receiving a shaft.

Between the outer ring surface 7 and the hub 11, the second clutch housing part 5 exhibits an inverse S-shaped profile.

As can be seen best in Fig. 6b, which shows a detail view of Detail D from Fig. 6a, the second clutch housing part 5 comprises a cylindrical outer ring surface 7 that is machined in order to be press fitted into the first clutch housing part 3. In addition, the front face of the cylinder of the second clutch housing part 5 is also machined, to form an end stop.

A method to produce a clutch housing according to the invention is depicted in Fig. 7.

The drawings on the upper side of Fig. 7 show the production of the first clutch housing part 3, the drawings on the bottom side show the production of the second clutch housing part 5, the drawing on the right side shows the assembled final clutch housing.

Each clutch housing part 3, 5 is made of one piece of blank which is made by sheet steel 4.

Each clutch housing part 3, 5 is stamped into its desired can shape. After that, the first clutch housing part 3 becomes roller die formed and machined. The second clutch housing part 5 becomes Grob formed and machined as well.

Afterwards, the second clutch housing part 5 gets presses into the first clutch housing part 3 and then laser welded, preferably by laser welding, and finally machined.

By using the design according to the invention, one can avoid using the costly flow forming and forging process and, due to the use of cans that are made by sheet steel, one can save material and machining cost.

### LIST OF REFERENCE SIGNS

- 1: first internal spline
- 2: second internal spline
- 3: first clutch housing part
- 4: sheet steel
- 5: second clutch housing part
- 6: internal surface area
- 7: outer ring surface
- 8: first cylindrical area
- 9: second cylindrical area
- 10a: embossment
- 10b: embossment
- 11: hub
- 12: weld

- S-S: cut from S to S
- A: detail A
- B: detail B
- C: detail C
- D: detail D
- M: machined region

## Claims

1. Clutch housing, comprising a first internal spline (1) and a second internal spline (2) which is located at a position different from the position of the first internal spline (1),
**characterized in that** the clutch housing comprises a first clutch housing part (3), which is a stamping part made of sheet steel (4) and which comprises the first internal spline (1), and that the clutch housing comprises a second clutch housing part (5), which is a stamping part made of sheet steel (4) and which comprises the second internal spline (2), wherein the first clutch housing part (3) and the second clutch housing part (5) are joined together to build the clutch housing.

2. Clutch housing according to claim 1,
**characterized in that** the first internal spline (1) and the second internal spline (2) are arranged coaxially and the first internal spline (1) and the second internal spline (2) have different diameters and/or the second internal spline (2) is shifted axially in relation to the first internal spline (1).

3. Clutch housing according to any of the preceding claims,
**characterized in that** the first clutch housing part (3) and the second clutch housing part (5) are joined together by press fit and/or by welding connection.

4. Clutch housing according to any of the preceding claims,
**characterized in that** the first clutch housing part (3) is a roller die part.

5. Clutch housing according to any of the preceding claims,
**characterized in that** the second clutch housing part (5) is a Grob part.

6. Clutch housing according to any of the preceding claims,
**characterized in that** the first clutch housing part (3) has essentially a cylindrical shape and the second clutch housing part (5) has essentially a cylindrical shape.

7. Clutch housing according to any of the preceding claims,
**characterized in that** the first clutch housing part (3) has an internal surface area (6) that is machined in order for the second clutch housing part (5) to be press fitted into the machined internal surface area (6).

8. Clutch housing according to any of the preceding claims,
**characterized in that** the second clutch housing part (5) comprises an outer ring surface (7) that is machined in order to be press fitted into the first clutch housing part (3).

9. Clutch housing according to any of the preceding claims,
**characterized in that** the first clutch housing part (3) comprises a first cylindrical area (8) of larger diameter and a second cylindrical area (9) of smaller diameter, wherein preferably in a transition zone between first cylindrical area (8) and second cylindrical area (9), at least in some sections, embossments (10a, 10b) are formed.

10. Clutch housing according to any of the preceding claims,
**characterized in that** the second clutch housing part (5) comprises a hub (11) that is adapted for receiving a shaft.

11. Method to produce a clutch housing according to any of the preceding claims,
**characterized in that** the first clutch housing part (3) is made by stamping a sheet steel (4) and forming the first internal spline (1) in the stamped sheet steel (4), that the second clutch housing part (5) is made by stamping another sheet steel (4) and forming the second internal spline (2) in this other stamped sheet steel (4), and that finally the first clutch housing part (3) and the second clutch housing part (5) become joined together to build the clutch housing.

12. Method according to claim 11,
**characterized in that** forming the first internal spline (1) in the stamped sheet steel (4) of the first clutch housing part (3) is done by roller die forming.

13. Method according to claim 11 or 12,
**characterized in that** forming the second internal spline (2) in the stamped sheet steel (4) of the second clutch housing part (5) is done by Grob forming.

14. Method according to any of the claims 11 to 13,
**characterized in that** the first clutch housing part (3) and the second clutch housing part (5) become joined together to build the clutch housing by pressing the second clutch housing part (5) into the first clutch housing part (3) and welding together, preferably by laser welding, the first and second clutch housing part (3, 5).

15. Method according to any of the claims 11 to 14,
**characterized in that** after forming the first internal spline (1) in the stamped sheet steel (4) of the first clutch housing part (3) the first clutch housing part (3) is machined and/or after forming the second internal spline (2) in the stamped sheet steel (4) of the second clutch housing part (5) the second clutch housing part (5) is machined.
